# EUROPEAN PATENT SPECIFICATION

(11) **EP 3 426 068 B1**
(45) Date of publication and mention of the grant of the patent: **29.04.2020**
(21) Application number: 17712042.5
(22) Date of filing: 10.03.2017
(51) Int. Cl.: A24F 15/18, A24F 47/00

(54) **PERSONAL CHARGING CASE FOR ELECTRONIC VAPING DEVICE**
PERSÖNLICHES LADEGEHÄUSE FÜR ELEKTRONISCHE VAPING-VORRICHTUNG
BOÎTIER DE CHARGEMENT PERSONNEL POUR DISPOSITIF DE VAPOTAGE ÉLECTRONIQUE

(30) Priority: 11.03.2016 US 201615067323
(43) Date of publication of application: 16.01.2019
(73) Proprietor: Philip Morris Products S.A., 2000 Neuchâtel (CH)
(72) Inventor: YERKIC-HUSEJNOVIC, Berina, Richmond, Virginia 23294 (US); BACHE, Terry, Richmond, Virginia 23219 (US); HAWES, Eric, Midlothian, Virginia 23113 (US); SCHIFF, David, Highland Park, New Jersey 08904 (US); MITCHELL, Edward, Edgewater, New Jersey 07020 (US); PHELAN, Chris, Collingswood, New Jersey 08108 (US); ZERWECK, Jason, Richmond, Virginia 23219 (US); GATTA, Tony, Philadelphia, Pennsylvania 19115 (US)
(74) Representative: Dowling, Ian
(86) International application number: PCT/EP2017/055682
(87) International publication number: WO 2017/153577

(56) References cited:
- WO-A1-2015/058341
- WO-A1-2015/175713
- WO-A1-2016/012811
- WO-A2-2015/023996
- GB-A- 2 528 712
- US-A1- 2012 227 753
- US-A1- 2014 053 858
- US-A1- 2015 059 785

## Description

The present disclosure relates in general to electronic vaping devices or e-vaping devices, and in particular to a personal charging case configured to charge e-vaping devices.

E-vaping devices, also referred to herein as electronic vaping devices (EVDs) may be used by adult vapers for portable vaping. Personal charging cases (PCCs) may provide an enclosure of one or more portions of an e-vaping device and therefore provide a mobile storage location for one or more e-vaping devices between vapings. In some cases, a PCC accommodates a disassembled e-vaping device, where a power supply section of the e-vaping device is accommodated in a separate portion of the PCC relative to another section of the e-vaping device. A PCC may enable an adult vaper to store, for example, multiple power supply sections for an e-vaping device, so that the adult vaper may replace a depleted power supply section. In some cases, a PCC enables charging of a power supply section of an e-vaping device, to extend a vaping capability of the e-vaping device.

US 2012/227753 A1 describes a charger package for use with electronic cigarette components. The package comprises an elongated compartment for receiving an elongated component of an electronic cigarette. A charge contact assembly is provided at a closed end of the elongated compartment and comprises a centre electrical contact provided on a first spring and a coaxial electrical contact provided on a second spring. The first and second springs urge the electrical contacts upwardly to provide contact between the charge contact assembly and the elongated component.

Also documents GB 2 528 712 A, WO 2016/012811 A1, US 2014/053858 A1, WO 2015/023996 A2, WO 2015/175713 A1, US 2015/059785 A1 and WO 2015/058341 A1 disclose personal charging cases for electronic vaping devices according to the prior art.

A personal charging case (PCC) according to some example embodiments enables periodic charging of an e-vaping device to maintain a sensory experience provided to adult vapers by the e-vaping device during vaping. The PCC may further provide awareness to adult vapers of operational parameters of the e-vaping device, including charge level and pre-vapor formulation reservoir level, thereby improving adult vaper awareness of a state of the e-vaping device.

According to some example embodiments, a personal charging case (PCC) for charging an e-vaping device includes a body configured to establish a partial enclosure of the e-vaping device within the PCC. The e-vaping device may include an internal battery and an electrical connection coupled to the internal battery. The body may include an interior configured to receive a portion of the e-vaping device, such that the e-vaping device is partially enclosed by the body; an electrical charging circuit (ECC), the ECC including an electrical connection within the body interior, the ECC being configured to charge the e-vaping device internal battery in response to the ECC electrical connection contacting the e-vaping device electrical connection; and a spring element positioned within the body interior, the spring element being configured to exert a spring force on the e-vaping device to push the e-vaping device electrical connection away from contact with the ECC electrical connection in the absence of a holding force.

In some example embodiments, the PCC further includes a cover configured to exert the holding force on the e-vaping device, based on the cover completing the enclosure of the e-vaping device within the PCC, the holding force being greater than the spring force such that the cover pushes the e-vaping device electrical connection into contact with the ECC electrical connection.

In some example embodiments, the PCC further includes an e-vaping device charge light indicator, the e-vaping device charge light indicator being configured to emit light at a selected one of a plurality of color temperatures based on a charge level of the e-vaping device internal battery.

In some example embodiments, the ECC includes an internal battery, the ECC internal battery being configured to fully charge the e-vaping device internal battery. In some example embodiments, the ECC internal battery has a minimum discharge capacity of 150 milliamp hours.

In some example embodiments, the PCC further includes a PCC charge light indicator, the PCC charge light indicator being configured to emit light at a selected one of a plurality of color temperatures based on a charge level of the ECC internal battery.

In some example embodiments, the e-vaping device further includes a pre-vapor formulation reservoir, the pre-vapor formulation reservoir configured to hold a pre-vapor formulation; and the PCC further includes an e-vaping device reservoir level light indicator, the e-vaping device reservoir level light indicator being configured to emit light at a selected one of a plurality of color temperatures based on an amount of pre-vapor formulation in the e-vaping device pre-vapor formulation reservoir.

In some example embodiments, the PCC further includes control circuitry electrically coupled to the ECC, the control circuitry being configured to communicate with at least one portion of the e-vaping device, the control circuitry being further configured to determine at least one of an e-vaping device internal battery charge status and an e-vaping device pre-vapor formulation reservoir status, based at least in part upon the communicating.

In some example embodiments, the ECC electrical connection extends along an internal sidewall of the body interior.

In some example embodiments, the ECC electrical connection is located at an end of the body interior, the end being distal from an opening in the body interior, the opening being configured to receive the e-vaping device into the body interior.

In some example embodiments, the PCC further includes a hinge mechanism, the hinge mechanism coupling at least one end of the cover to the body.

In some example embodiments, the body is configured to receive the e-vaping device into the body interior along a longitudinal axis of the e-vaping device.

According to some example embodiments, a method includes configuring a personal charging case (PCC) to charge an internal battery of an e-vaping device based on a holding force being exerted on the e-vaping device. The holding force may hold an electrical connection of the e-vaping device in electrical contact with an electrical charging circuit (ECC) of the PCC. The configuring may include coupling a spring element to an interior of a body of the PCC, such that the PCC is configured to exert a spring force on an e-vaping device inserted into the PCC body interior, the spring force separating the e-vaping device electrical connection from electrical contact with the ECC in the absence of the holding force.

In some example embodiments, the method further includes electrically coupling an e-vaping device charge light indicator to the ECC, the e-vaping device charge light indicator being configured to emit light at a selected one of a plurality of color temperatures based on a charge status of the e-vaping device internal battery.

In some example embodiments, the method further includes electrically coupling an e-vaping device reservoir level light indicator to the ECC, the e-vaping device reservoir level light indicator being configured to emit light at a selected one of a plurality of color temperatures based on an amount of pre-vapor formulation included within at least one reservoir of the e-vaping device.

In some example embodiments, the method further includes electrically coupling a PCC charge light indicator to an internal battery of the ECC, the PCC charge light indicator being configured to emit light at a selected one of a plurality of color temperatures based on a charge status of the ECC internal battery.

In some example embodiments, the method further includes electrically coupling control circuitry to the ECC, the control circuitry being configured to communicate with one or more portions of the e-vaping device, the control circuitry being further configured to determine at least one of an e-vaping device internal battery charge status and an e-vaping device pre-vapor formulation reservoir status, based on the communicating.

According to some example embodiments, a method includes receiving a portion of an e-vaping device into an interior of a personal charging case (PCC), such that the PCC partially encloses the e-vaping device, the PCC interior including a spring element and an electrical connection, the e-vaping device including an internal battery and an electrical connection coupled to the internal battery; and exerting a spring force, by the spring element, on the portion of the e-vaping device to maintain a separation distance between the e-vaping device electrical connection and the PCC electrical connection.

In some example embodiments, the method further includes coupling the PCC electrical connection to the e-vaping device electrical connection, based on the spring element being compressed by a holding force, the holding force being greater than the spring force, the holding force being exerted on the spring element by the portion of the e-vaping device.

In some example embodiments, the PCC includes a battery, the PCC battery being coupled to the PCC electrical connection; and the method further includes supplying electrical power to the e-vaping device internal battery, based on the PCC electrical connection contacting the e-vaping device electrical connection.

In some example embodiments, the method further includes driving at least one light indicator included in the PCC to emit light, based on at least one of an amount of electrical power stored in the PCC battery, an amount of electrical power stored in the e-vaping device internal battery, and an amount of pre-vapor formulation stored in a reservoir of the e-vaping device.

The various features and advantages of the non-limiting embodiments herein may become more apparent upon review of the detailed description in conjunction with the accompanying drawings. The accompanying drawings are merely provided for illustrative purposes and should not be interpreted to limit the scope of the claims. The accompanying drawings are not to be considered as drawn to scale unless explicitly noted. For purposes of clarity, various dimensions of the drawings may have been exaggerated.
FIG. 1A is a perspective view of a personal charging case (PCC) for an e-vaping device according to some example embodiments.
FIG. 1B is a cross-sectional view along line IB-IB' of the PCC of FIG. 1A.
FIG. 2A is a cross-sectional view of a PCC partially enclosing an e-vaping device according to some example embodiments.
FIG. 2B is a cross-sectional view of a PCC electrically coupled with an e-vaping device according to some example embodiments.
FIG. 3 is a cross-sectional view of a PCC partially enclosing an e-vaping device according to some example embodiments.
FIG. 4A is a side view of a PCC partially enclosing an e-vaping device according to some example embodiments.
FIG. 4B is a side view of a PCC partially enclosing an e-vaping device according to some example embodiments.
FIG. 5 is a side view of a PCC partially enclosing an e-vaping device according to some example embodiments.
FIG. 6 is a flowchart illustrating a method for configuring a PCC to charge an e-vaping device according to some example embodiments.
FIG. 7 is a flowchart illustrating a method for inserting an e-vaping device into the PCC to charge the e-vaping device according to some example embodiments.

Some detailed example embodiments are disclosed herein. However, specific structural and functional details disclosed herein are merely representative for purposes of describing example embodiments. Example embodiments may, however, be embodied in many alternate forms and should not be construed as limited to only the example embodiments set forth herein.

Accordingly, while example embodiments are capable of various modifications and alternative forms, example embodiments thereof are shown by way of example in the drawings and will herein be described in detail. It should be understood, however, that there is no intent to limit example embodiments to the particular forms disclosed, but to the contrary, example embodiments are to cover all modifications, equivalents, and alternatives falling within the scope of example embodiments. Like numbers refer to like elements throughout the description of the figures.

It should be understood that when an element or layer is referred to as being "on," "connected to," "coupled to," or "covering" another element or layer, it may be directly on, connected to, coupled to, or covering the other element or layer or intervening elements or layers may be present. In contrast, when an element is referred to as being "directly on," "directly connected to," or "directly coupled to" another element or layer, there are no intervening elements or layers present. Like numbers refer to like elements throughout the specification.

It should be understood that, although the terms first, second, third, and so forth may be used herein to describe various elements, regions, layers or sections, these elements, regions, layers, or sections should not be limited by these terms. These terms are only used to distinguish one element, region, layer, or section from another element, region, layer, or section. Therefore, a first element, region, layer, or section discussed below could be termed a second element, region, layer, or section without departing from the teachings of example embodiments.

Spatially relative terms (for example, "beneath," "below," "lower," "above," "upper," and the like) may be used herein for ease of description to describe one element or feature's relationship to another element or feature as illustrated in the figures. It should be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Therefore, the term "below" may encompass both an orientation of above and below. The device may be otherwise oriented (rotated 90 degrees or at other orientations) and the spatially relative descriptors used herein interpreted accordingly.

The terminology used herein is for the purpose of describing various example embodiments only and is not intended to be limiting of example embodiments. As used herein, the singular forms "a," "an," and "the" are intended to include the plural forms as well, unless the context clearly indicates otherwise. It will be further understood that the terms "includes," "including," "comprises," and "comprising," when used in this specification, specify the presence of stated features, integers, steps, operations, or elements, but do not preclude the presence or addition of one or more other features, integers, steps, operations, elements, or groups thereof.

Example embodiments are described herein with reference to cross-sectional illustrations that are schematic illustrations of idealized embodiments (and intermediate structures) of example embodiments. As such, variations from the shapes of the illustrations as a result, for example, of manufacturing techniques or tolerances, are to be expected. Therefore, example embodiments should not be construed as limited to the shapes of regions illustrated herein but are to include deviations in shapes that result, for example, from manufacturing.

Unless otherwise defined, all terms (including technical and scientific terms) used herein have the same meaning as commonly understood by one of ordinary skill in the art to which example embodiments belong. It will be further understood that terms, including those defined in commonly used dictionaries, should be interpreted as having a meaning that is consistent with their meaning in the context of the relevant art and will not be interpreted in an idealized or overly formal sense unless expressly so defined herein.

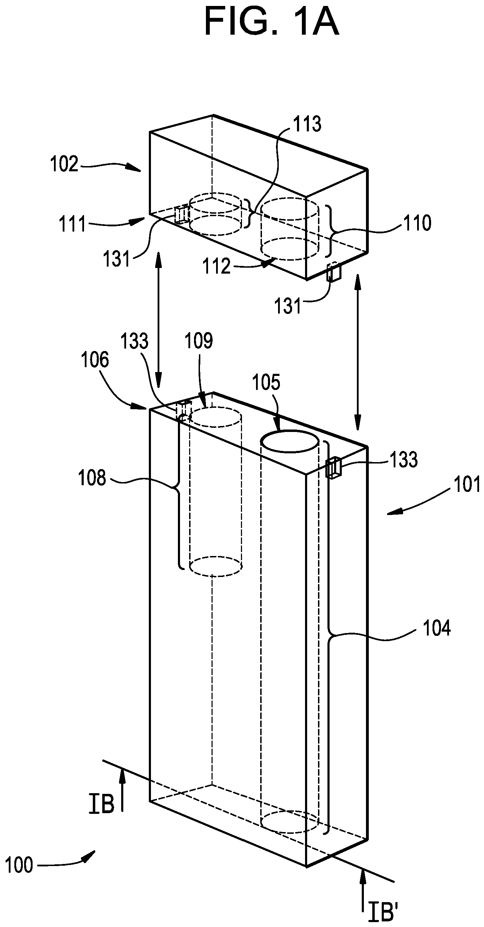

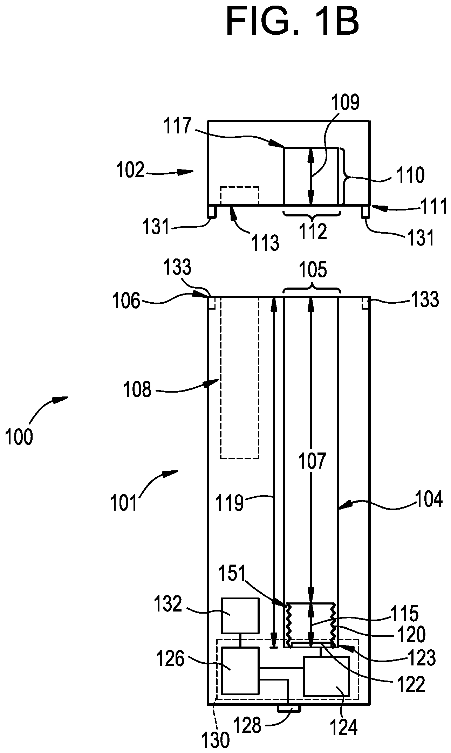

FIG. 1A is a perspective view of a personal charging case (PCC) for an e-vaping device according to some example embodiments. FIG. 1B is a cross-sectional view along line IB-IB' of the PCC of FIG. 1A. As described herein, an e-vaping device may include one or more of the features set forth in U.S. Patent Application Publication No. 2013/0192623 to Tucker et al. filed January 31, 2013, the entire contents of which are incorporated herein by reference thereto. As used herein, the term "e-vaping device" is inclusive of all types of electronic vaping devices, regardless of form, size or shape.

The PCC 100 includes a body element 101, also referred to herein as a PCC "body". The body 101 includes an e-vaping device slot 104. The slot 104 extends into an interior of the body 101. The slot 104 is configured to receive at least a portion of an assembled e-vaping device. The slot 104 includes an opening 105 on an upper surface 106 of the PCC body 101. The slot 104 is configured to receive at least a portion of an assembled e-vaping device via the opening 105.

The PCC 100 includes a cover element 102, also referred to herein as a PCC "cover". The cover 102 includes an e-vaping device slot 110. The slot 110 extends into an interior of the cover 102. The slot 110 is configured to receive at least a portion of an assembled e-vaping device. The slot 110 includes an opening 112 on a lower surface 111 of the PCC cover 102. The slot 110 is configured to receive at least a portion of an assembled e-vaping device via the opening 112.

In some example embodiments, the cover 102 is configured to be coupled to the body 101 via coupling the lower surface 111 of the cover 102 to an upper surface 106 of the body. Coupling the cover 102 to the body 101 may include coupling the slots 110 and 104 together, such that the slots 110 and 104 collectively establish an enclosure in which an assembled e-vaping device may be accommodated. In some example embodiments, the cover 102 includes one or more latch interfaces 131, the body 101 includes one or more latch interfaces 133, and the cover 102 is configured to be coupled to the body 101 via coupling of the interfaces 131, 133. In some example embodiments, the cover 102 is configured to be coupled to the body 101 via a friction fit of one or more elements of the cover 102 and the body 101.

As shown in FIG. 1B, the PCC body 101 may include an electrical charging circuit 130. The electrical charging circuit (ECC) is coupled to an electrical connection 122 in the slot 104. The ECC 130 may include a battery 124 that is electrically coupled to the ECC electrical connection 122. The ECC 130 may include control circuitry 126 that is electrically coupled to one or more of the battery 124 and the ECC electrical connection 122. The ECC 130 may be configured to selectively supply electrical power to an e-vaping device in response to the e-vaping device being electrically coupled to the ECC 130 via contact with the ECC electrical connection 122.

The control circuitry 126 may include processing circuity including, but not limited to, a processor, Central Processing Unit (CPU), a controller, an arithmetic logic unit (ALU), a digital signal processor, a microcomputer, a field programmable gate array (FPGA), a System-on-Chip (SoC), a programmable logic unit, a microprocessor, or any other device capable of responding to and executing instructions in a defined manner. In some example embodiments, the control circuitry 126 may be an application-specific integrated chip (ASIC).

The control circuitry 126 may be configured as a special purpose machine by executing computer-readable program code stored on a storage device. The program code may include at least one of program or computer-readable instructions, software elements, software modules, data files, data structures, and the like, capable of being implemented by one or more hardware devices, such as one or more of the control circuitry mentioned above. Examples of program code include both machine code produced by a compiler and higher level program code that is executed using an interpreter.

The control circuitry 126 may include one or more storage devices. The one or more storage devices may be tangible or non-transitory computer-readable storage media, such as at least one of random access memory (RAM), read only memory (ROM), a permanent mass storage device (such as a disk drive), solid state (for example, NAND flash) device, and any other like data storage mechanism capable of storing and recording data. The one or more storage devices may be configured to store computer programs, program code, instructions, or some combination thereof, for one or more operating systems, for implementing the example embodiments described herein, or both. The computer programs, program code, instructions, or some combination thereof, may also be loaded from a separate computer readable storage medium into the one or more storage devices, one or more computer processing devices, or both, using a drive mechanism. Such separate computer readable storage medium may include at least one of a Universal Serial Bus (USB) flash drive, a memory stick, a Blu-ray/DVD/CD-ROM drive, a memory card, and other like computer readable storage media. The computer programs, program code, instructions, or some combination thereof, may be loaded into the one or more storage devices, the one or more computer processing devices, or both, from a remote data storage device via a network interface, rather than via a local computer readable storage medium. Additionally, the computer programs, program code, instructions, or some combination thereof, may be loaded into the one or more storage devices, the one or more processors, or both, from a remote computing system that is configured to transfer, distribute, or transfer and distribute the computer programs, program code, instructions, or some combination thereof, over a network. The remote computing system may transfer, distribute, or transfer and distribute the computer programs, program code, instructions, or some combination thereof, via at least one of a wired interface, an air interface, and any other like medium.

As shown in FIG. 1B, the ECC electrical connection 122 may be located at a base 123 of the slot 104, where the base 123 is distal from the opening 105 of the slot 104. However, it will be understood that the ECC electrical connection may be located at various locations in the slot, including one or more portions of the sidewalls of the slot 104.

As shown in FIG. 1B, the PCC body 101 may include a spring element 120 installed in the slot 104. In some example embodiments, the spring element 120 is configured to exert a spring force on an object in contact with a distal end 151 of the spring element. The spring force pushes an object away from contact with the ECC electrical connection 122 in the absence of a countering force. A countering force may be referred to interchangeably herein as a holding force. A proximate end of the spring element 120 is mounted at the base 123. The spring element 120 extends away from the base 123 through the slot 104. In the illustrated embodiment shown in FIG. 1B, the spring element 120 distal end 151 is extended at a separation distance 115 through the slot 104 in the absence of a holding force. The spring element 120 may be compressed by a holding force, such that a distal end 151 of the spring element 120 extending away from the base 123 is pushed towards the base 123. Upon application of a sufficient holding force on the distal end 151 of the spring element 120, an object may sufficiently compress the spring element 120 to cause the object to contact the ECC electrical connection 122, thereby electrically coupling the object with the ECC 130.

In some example embodiments, the spring element 120 is configured to exert a sufficient spring force on an e-vaping device to prevent the e-vaping device from contacting the ECC electrical connection 122 when the e-vaping device is inserted into the slot. The spring element 120 may be configured to exert a spring force that exceeds the weight of the assembled e-vaping device. The spring element 120 may push an assembled e-vaping device away from contact with the ECC electrical connection 122 in the absence of a holding force.

In some example embodiments, the cover 102 is configured to exert a holding force on an assembled e-vaping device when the cover 102 is coupled to the body 101. The cover 102 may be configured to exert the holding force via contact between the upper surface 117 of the slot 110 with an end of the e-vaping device held in slot 104. The cover 102 may be configured to exert a holding force, also referred to herein as a countering force. The holding force may be greater than the spring force exerted by the spring element 120, so that the cover 102 pushes the e-vaping device into contact with the ECC electrical connection 122 via compression of the spring element 120. When the cover 102 is coupled to the body 101, the cover 102 may, based on completing the enclosure of the e-vaping device within the PCC 100, exert the holding force on the e-vaping device such that the cover pushes the e-vaping device into contact with the ECC electrical connection.

As shown, the slot 104 may have a total length 119 that is shorter than a total length of an assembled e-vaping device that may be inserted into the slot 104. The cover slot 110 may have a length 109 that is approximately equal to the difference between length 119 and the total length of an assembled e-vaping device that may be inserted into the slot 104. Therefore, a completed enclosure established by slots 110 and 104 may have a length that is approximately equal to the length of the assembled e-vaping device.

Therefore, when an assembled e-vaping device is inserted into slot 104, the spring element 120 may push the e-vaping device to a separation distance 115 from the base 123 of the slot, such that a portion of the e-vaping device extends through a partial length 107 of the slot 104 but a portion of the e-vaping device is exposed from slot 104. In addition, when the cover 102 is coupled to the body 101, such that the slot 110 receives an exposed portion of the e-vaping device, the lower surface 111 of the cover 102 may exert the holding force on an end of the e-vaping device as a result of the cover 102 being coupled to the body 101, thereby forcing the e-vaping device to compress the spring element 120 and bring an opposite end of the e-vaping device into contact with the ECC electrical connection 122.

In some example embodiments, the slot 110 is absent from cover 102, and the slot 104 has a total length 119 that is at least equal to a total length of an assembled e-vaping device that may be inserted into the slot 104. The lower surface 111 of the cover 102 may exert the holding force on an end of the e-vaping device as a result of the cover 102 being coupled to the body 101, thereby forcing the e-vaping device to compress the spring element 120 and bring an opposite end of the e-vaping device into contact with the ECC electrical connection 122.

As shown in FIG. 1B, the PCC body 101 may include a transceiver 132. The transceiver 132 may be communicatively coupled to the control circuitry 126. The control circuitry 126 may communicate with one or more electronic devices via establishing a communication link with the devices via the transceiver 132. The one or more electronic devices may include one or more computer devices, including one or more mobile devices, smartphones, and so forth. The transceiver may include any known wireless communication interface, including an ad hoc network communication interface.

As shown in FIG. 1B, the PCC body 101 may include one or more sets of light indicators 128. The one or more sets of light indicators 128 may be coupled to one or more portions of the ECC 130. In the illustrated embodiments, the one or more sets of light indicators 128 are electrically coupled to the control circuitry 126. However, it will be understood that one or more sets of light indicators may be electrically coupled to various portions of the ECC 130, including the battery 124, ECC electrical connection 122, some combination thereof, or the like. The one or more sets of light indicators 128 may include one or more light emitting diodes (LEDs). In some example embodiments, the PCC 100 is configured to selectively activate one or more light indicators in a set of light indicators 128 according to a status of one or more portions of the PCC 100 or an e-vaping device electrically coupled with the PCC 100 via connection 122. A status may include one or more of a charge level of battery 124, a charge level of a battery included in an e-vaping device coupled to connection 122, a pre-vapor formulation reservoir level of a reservoir included in the e-vaping device, some combination thereof, and so forth. Selectively activing one or more light indicators included in the set of light indicators 128 may include one or more of selectively activating a selected quantity of light indicators in the set of light indicators 128 based on a given status of one or more portions of the PCC 100 or e-vaping device, causing a selected one or more light indicators in the set of light indicators 128 to emit light at one or more selected color temperatures, some combination thereof, and so forth. It will be understood that activating a light indicator may include causing the light indicator to emit light.

As shown in FIG. 1A and FIG. 1B, the PCC 100 may be configured to accommodate a section of an e-vaping device in a separate slot, relative to the slot 104 in which an assembled e-vaping device may be received. As shown, PCC body 101 may include a separate slot 108. The slot 108 may be sized to accommodate a section of an e-vaping device. The slot 108 may be configured to accommodate one or more of an e-vaping device cartridge section or an e-vaping device power supply section. As shown, the PCC cover 102 may include a complimentary slot 113. The slot 113 is configured to enclose the opening of the slot 108, so that the slots 108 and 113 may collectively enclose a section of an e-vaping device when the cover 102 is closed over the upper surface 106 of the PCC body 101.

As shown in FIG. 1A and FIG. 1B, the PCC 100 may be configured to fully charge an internal battery of an e-vaping device electrically coupled to a battery 124 from an empty charge state. The PCC 100 may enable the e-vaping device to enable additional vapings by an adult vaper of an e-vaping device, thereby improving the adult vaper's sensory experience. In some example embodiments, the PCC may enable an assembled e-vaping device to be repeatedly inserted into the PCC slot 104 to be repeatedly recharged between individual sets of vapings by an adult vaper, thereby enabling the e-vaping device battery to be "topped off between vapings without requiring at least partial disassembly of the e-vaping device. As a result, the sensory experience provided by the e-vaping device may be improved, as the e-vaping device may be recharged between vapings so that the e-vaping device internal battery has a maximum charge level during each vaping. The sensory experience may be associated with the charge level of the internal battery of the e-vaping device, as the vaporization of pre-vapor formulation may be proportional to the charge level of the internal battery. Because the PCC may enable repeated charging of an assembled e-vaping device without disassembly of same, the PCC may enable an adult vaper to quickly insert the e-vaping device into the PCC between vapings to "top off" the internal battery and then quickly and easily retrieve the e-vaping device from the PCC for vaping without reassembly. As a result, an adult vaper may be provided with an improved vaping experience.

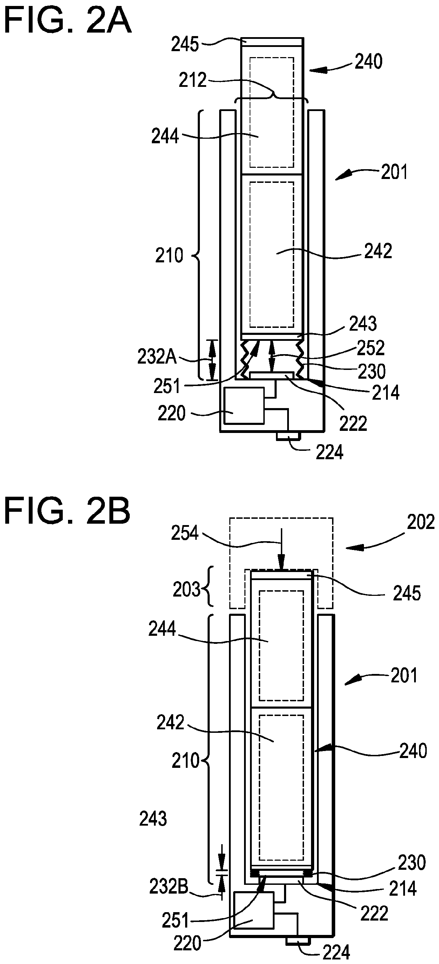

FIG. 2A is a cross-sectional view of a PCC partially enclosing an e-vaping device according to some example embodiments. FIG. 2B is a cross-sectional view of a PCC electrically coupled with an e-vaping device according to some example embodiments. The PCCs shown in FIG. 2A and FIG. 2B may include any of the embodiments of PCCs included herein, including the PCC 100 shown in FIG. 1A and FIG. 1B.

PCC body 201 includes a slot 210, an ECC 220, an ECC connection 222 mounted at a base 214 of the slot 210, a spring element 230 mounted at the base 214, and a set of light indicators 224. The slot 210 extends into the interior of the body 201 from an opening 212. The ECC 220 is electrically coupled to the connection 222 and the set of light indicators 224. The ECC 220 is configured to supply electrical power to a battery of an assembled e-vaping device in response to the internal battery of the assembled e-vaping device being electrically coupled to the ECC. The internal battery of the assembled e-vaping device may be electrically coupled to the ECC via contact of an electrical connection of the e-vaping device with the connection 222.

As shown at FIG. 2A, an assembled e-vaping device 240 is inserted into the slot 210 via opening 212. The e-vaping device 240 is inserted along a longitudinal axis of the slot 210 and the e-vaping device 240. The e-vaping device 240 includes a cartridge (or first section) 244 and a power supply section (or second section) 242. The power supply section 242 includes at least one internal battery or power supply and an e-vaping device electrical connection 243 at a tip end of the e-vaping device 240. The power supply section 242 may also include one or more light indicators, including one or more LEDs, at the tip end. The cartridge 244 may include a pre-vapor formulation reservoir that holds one or more pre-vapor formulations. The cartridge 244 may include an outlet end insert 245 at an outlet end of the e-vaping device 240. The outlet end insert 245 may include one or more openings via which a vapor may be drawn during vaping. The cartridge 244 may include a heater configured to vaporize at least some of the pre-vapor formulation held in the reservoir to form a vapor. During vaping, an internal battery in the power supply section 242 may supply power to a heater in the cartridge 244. The heater may heat a portion of pre-vapor formulation to vaporize the pre-vapor formulation, therefore forming a vapor. The vapor may be drawn through the outlet end insert 243.

As shown, the e-vaping device 240 is inserted tip-first through the slot 104 so that the tip end rests in contact with the distal end 251 of the spring element 230. As shown, the electrical connection 243 of the e-vaping device 240 is located at the tip end.

The spring element 230, as shown in FIG. 2A, exerts a spring force against the tip end of the e-vaping device 240. At an equilibrium state, where no additional holding forces are applied to the e-vaping device 240, the distal end 251 of the spring element 230 may be at an equilibrium position 232A. Where the distal end 251 of the spring element 230 is at the equilibrium position 232A, the tip end of the e-vaping device 240 that is in contact with the distal end 251 of the spring element 230 may be separated from the ECC electrical connection 222 by a separation distance 252. As a result, the spring element 230 may preclude charging of an internal battery included in the power supply section 242 by the ECC 220.

As shown in FIG. 2B, a holding force 254 is applied to the exposed outlet end of the e-vaping device 240. The holding force 254, also referred to herein as a "countering force," is greater than the spring force exerted by the spring element 230, therefore the holding force pushes the e-vaping device further into the slot 210, compressing 232B the spring element 230 sufficiently to enable the tip end of the e-vaping device, and the electrical connection 243 included thereon, to contact the ECC electrical connection 222 at the base 214 of the slot 210. The contacting of the connections 243, 222 may electrically couple an internal battery included in the power supply section 242 of the e-vaping device 240 with a battery included in the ECC 220. Based on the electric coupling, the ECC 220 may supply electrical power to the internal battery included in the power supply section 242 via contacting connectors 243, 222, thereby charging the power supply section 242 of the e-vaping device 240.

In some example embodiments, control circuitry included in the ECC 220 selectively controls the supply of electrical power to the power supply section 242 via connectors 222, 243 in response to the connectors 222, 243 contacting each other. For example, the control circuitry may selectively supply power in response to adult vaper interaction with a button included in the PCC, including a charging button. In some example embodiments, the control circuitry may refrain from supplying power to the power supply section 242 in response to a determination that a charge level of the battery included in the power supply section 242 is more or less than a certain threshold proportion of a full charge. For example, the control circuitry may disable supplying power to the power supply section 242 in response to a determination that an amount of electrical power stored in the ECC 220 is equal to or less than a threshold amount of electrical power, where the threshold amount of electrical power is an amount of electrical power stored in the power supply section 242 of the e-vaping device 240. In another example, the control circuitry may disable supplying power to the power supply section 242 in response to a determination that an amount of electrical power stored in the ECC 220 is equal to or less than a threshold proportion of a full charge of the ECC 220. In another example, the control circuitry may disable supplying power to the power supply section 242 in response to a determination that an amount of electrical power stored in the power supply section 242 is equal to or greater than a threshold amount of electrical power.

In some example embodiments, the holding force 254 is exerted by a cover of the PCC based on the cover being coupled with the PCC body 201. As shown in FIG. 2B, for example, a cover 202 may be coupled to the body 201, such that the cover 202 contacts an exposed portion 203 of the e-vaping device 240 and exerts the holding force 254 on the exposed portion 203 due to the cover 202 being coupled to the body 201.

In some example embodiments, the holding force may be exerted by an adult vaper on an exposed portion 203 of the e-vaping device 240.

In some example embodiments, a PCC including a spring element may provide an adult vaper with an improved vaping experience, as the spring element may improve adult vaper access to an e-vaping device from the PCC. The spring element may partially "eject" the e-vaping device from the PCC slot in the absence of a cover over the PCC body, a manual action to push the e-vaping device into the slot, and so forth, such that an adult vaper may easily remove the e-vaping device from the slot when desired, and the e-vaping device may be pushed further into the slot when charging of the e-vaping device internal battery may be desired. Ease of removal of the e-vaping device from the slot may be improved via pushing the e-vaping device at least partially from the PCC body slot, so that a greater portion of the e-vaping device is exposed. The greater exposed portion of the e-vaping device may provide a greater portion of the e-vaping device which may be grasped by an adult vaper to manually retrieve the e-vaping device from the PCC.

In some example embodiments, the PCC may improve the vaping experience via separating e-vaping device from the ECC connection in the absence of a holding force. The electrical coupling and decoupling of the e-vaping device with the ECC may be implemented via exertion or removal of a holding force on the e-vaping device by a PCC cover. Safety may be improved, as the adult vaper may be isolated from manually manipulating the e-vaping device concurrently with the e-vaping device being electrically coupled with one or more portions of the PCC.

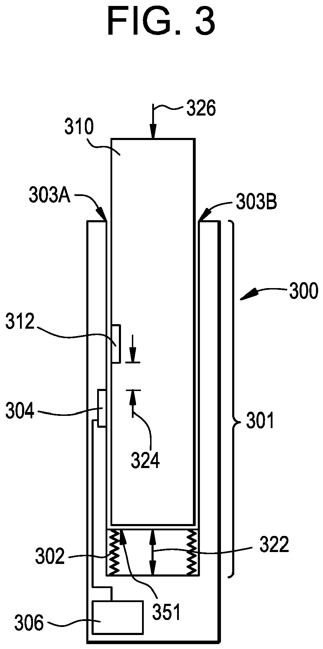

FIG. 3 is a cross-sectional view of a PCC partially enclosing an e-vaping device according to some example embodiments. The PCC shown in FIG. 3 may include any of the embodiments of PCCs included herein, including the PCC 100 shown in FIG. 1A and FIG. 1B.

In some example embodiments, a PCC body includes an ECC electrical connection that is mounted to a sidewall of the body slot, so that the PCC body is configured to electrically couple the ECC with an e-vaping device based on the ECC electrical connection contacting an electrical connection of the e-vaping device. The electrical connection of the e-vaping device may extend along a longitudinal surface of the e-vaping device.

As shown in FIG. 3, for example, a PCC 300 includes a slot 301, where the slot 301 includes sidewalls 303A and 303B extending along a longitudinal axis of the slot 301. The PCC 301 also includes an ECC 306 and an ECC electrical connection 304 coupled to a sidewall 303A, where the ECC electrical connection 304 is electrically coupled to the ECC 306. A spring element 302 is coupled to the slot 301 and is configured to exert a spring force 322 on an e-vaping device 310 inserted into the slot.

As shown, the e-vaping device 310 includes an electrical connection 312. The electrical connection 312 extends along a surface of the e-vaping device 310, where the surface extends along a longitudinal axis of the e-vaping device 310. The electrical connection 312 of the e-vaping device 310 may be coupled to one or more internal batteries of the e-vaping device 310. The PCC 301 is configured to electrically couple the electrical connection to the ECC 306. Electrically coupling the electrical connection 312 to the ECC 306 may include electrically coupling an internal battery of the e-vaping device 310 to the ECC 306, based on sliding contact between the connections 304, 312 when the e-vaping device 310 is inserted a sufficient distance into the slot 301 to place connection 312 in sliding contact with connection 304.

As shown, the spring element 302 may exert a spring force 322 on the tip end of the e-vaping device 310 in contact with the distal end 351 of the spring element 320. The spring element 320 may maintain a separation distance 324 between the connectors 312, 304, thereby preventing the electrical coupling. As also shown, a holding force 326 applied to the e-vaping device 310 may overcome the spring force 322 and cause the e-vaping device 310 to compress the spring element 320. The e-vaping device 310 may be pushed further into the slot by the holding force 326, such that the connections 312, 304 come into sliding contact, therefore completing the electric coupling.

The spring element 320 may reestablish the separation distance 324, thereby electrically decoupling the e-vaping device 310 from the ECC 306, based on a sufficient reduction or elimination of the holding force 326 so that the spring element 320 pushes the e-vaping device 310 towards the opening of the slot 301.

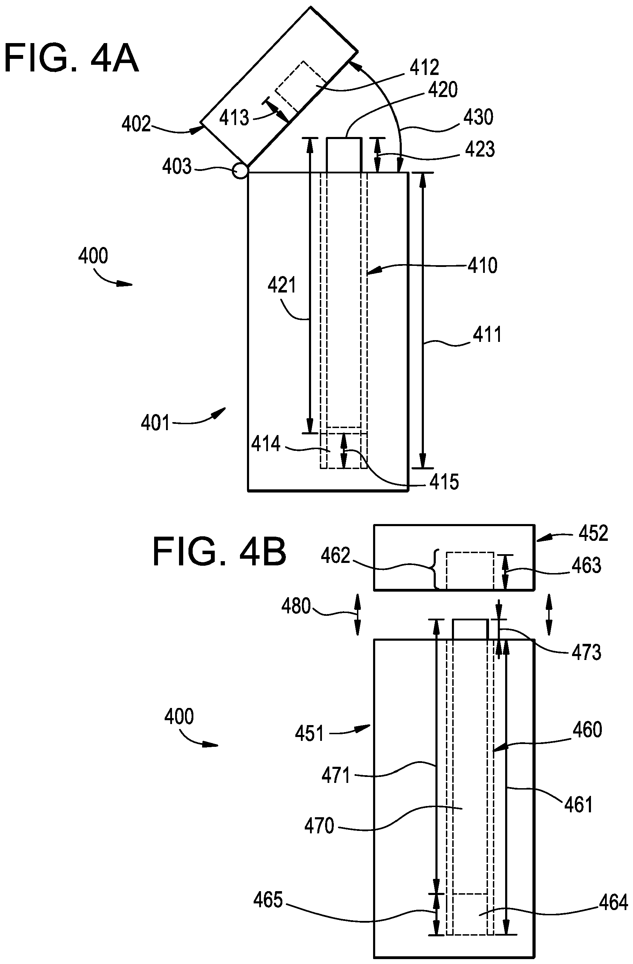

FIG. 4A is a side view of a PCC partially enclosing an e-vaping device according to some example embodiments. FIG. 4B is a side view of a PCC partially enclosing an e-vaping device according to some example embodiments. The PCCs shown in FIG. 4A and FIG. 4B may include any of the embodiments of PCCs included herein, including the PCC 100 shown in FIG. 1A and FIG. 1B.

In some example embodiments, a PCC includes a body and a cover, where the body is configured to partially enclose an e-vaping device and the cover is configured to complete the enclosure of the e-vaping device when the cover and body are coupled together.

In some example embodiments, the cover is configured to exert the holding force on an exposed portion of the e-vaping device, where the exposed portion is not enclosed by the PCC body, so that the cover pushes the e-vaping device sufficiently far into the slot of the PCC body to bring an electrical connection of the e-vaping device into contact with an electrical connection of the ECC included in the PCC.

FIG. 4A shows a PCC 400 including a body 401 and a cover 402 coupled to the body 401 via a hinge mechanism 403. The body includes a slot 410 extending along a length 411. The cover 402 includes a slot 412 extending along a length 413. The combined lengths 411 and 413 may substantially equal a total length 421 of an e-vaping device 420. The PCC 400 includes a hinge mechanism 403 coupling the cover 402 to the body 401 at an end of the cover 402. The cover 402 may be configured to open or close 430 in a pivoting motion based on the hinge mechanism 403. As shown, a spring element 414 in the slot 410 is exerting a spring force 415 on the e-vaping device 420. The cover 402 is configured to exert a holding force on an exposed portion 423 of an e-vaping device 420 in the slot 410, so that the cover 402 pushes the e-vaping device 423 into the slot 410 to contact an electrical connection of the e-vaping device 420 (not shown) with an electrical connection of an ECC of the PCC body (not shown).

FIG. 4B shows a PCC 450 including a body 451 and a cover 452 independently of a hinge mechanism. The body includes a slot 460 extending along a length 461. The cover 452 includes a slot 462 extending along a length 463. The combined lengths 461 and 463 substantially equal a total length 471 of an e-vaping device 470. The cover 452 is separate from the body 451. The cover 452 may be configured to couple or decouple to the body 451 in a translation motion 480. As shown, a spring element 464 in the slot 460 is exerting a spring force 465 on the e-vaping device 470. The cover 452 is configured to exert a holding force on an exposed portion 473 of an e-vaping device 470 in the slot 460, so that the cover 452 pushes the e-vaping device 473 into the slot 460 to contact an electrical connection of the e-vaping device 470 (not shown) with an electrical connection of an ECC of the PCC body (not shown).

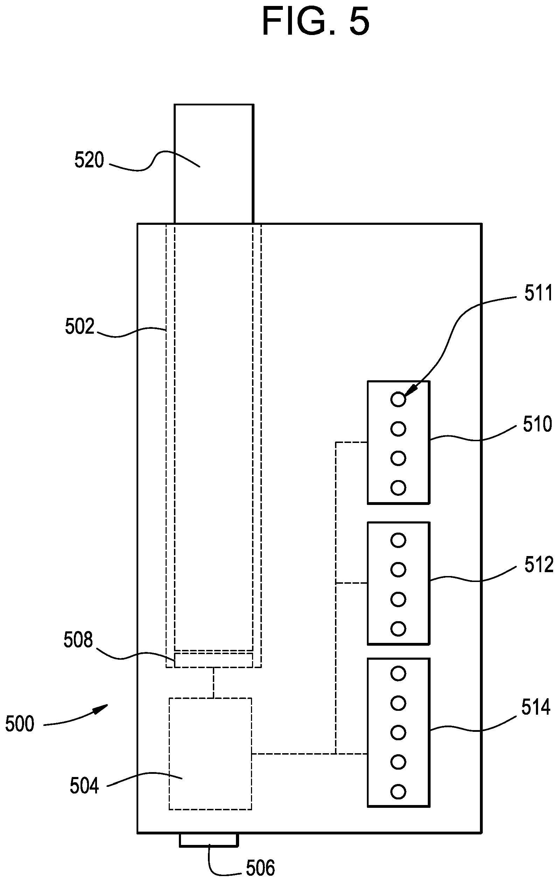

FIG. 5 is a side view of a PCC partially enclosing an e-vaping device according to some example embodiments. The PCC shown in FIG. 5 may include any of the embodiments of PCCs included herein, including the PCC 100 shown in FIG. 1A and FIG. 1B.

In some example embodiments, a PCC includes one or more sets of light indicators, where the light indicators may emit light based on a status of one or more elements of the PCC or an e-vaping device electrically coupled thereto.

The PCC 500 shown in FIG. 5 includes a slot 502, an ECC 504, an ECC electrical connection 508 in the slot 502, an interface 506, and multiple sets 510, 512, and 514 of light indicators 511. Each set of light indicators is electrically coupled to the ECC 504 via one or more electrical leads and may be controlled by one or more elements of the ECC 504, including control circuitry that may be included in the ECC 504. As shown, the slot 502, ECC 504, ECC electrical connection 508, and electrical leads coupling the ECC 504 to the sets 510, 512, 514 of light indicators are internal to the PCC 500.

As further shown, an e-vaping device 520 is inserted into the slot 502 and is in contact with the connection 508 in the slot, thereby electrically coupling one or more portions of the e-vaping device 520 with the ECC 504. In some embodiments, information associated with one or more portions of the e-vaping device 502 may be downloaded from the e-vaping device 520 to the ECC 504. In some embodiments, one or more instances of control circuitry included in the ECC 504 may process the information to determine one or more statuses associated with one or more different portions of the e-vaping device 520. In some example embodiments, one or more instances of control circuitry included in the ECC 504 may determine a status associated with one or more portions of the PCC based on processing information associated with the one or more portions.

In some example embodiments, separate sets of light indicators may emit light based on different statuses associated with different portions of the PCC or e-vaping device. For example, set 514 may emit light differently based on a charge level of a battery included in the ECC 504, set 512 may emit light differently based on a charge level of an internal battery of the e-vaping device 520, and set 510 may emit light differently based on an amount of pre-vapor formulation in a pre-vapor formulation reservoir of the e-vaping device.

In some example embodiments, a given set of light indicators includes multiple light indicators 511, as shown by sets 510, 512, 514 in FIG. 5. In some example embodiments, to emit light differently based on a given status of an element of PCC 501 or the e-vaping device 520, a set of light indicators may selectively activate the multiple light indicators according to the status. For example, where set 512 includes four light indicators 511 and may emit light differently based on a charge level of an internal battery of the e-vaping device 520, all four light indicators 511 may emit light when the internal battery has a charge level at or above a full charge threshold value. In addition, three of the four light indicators may emit light when the internal battery has a charge level below the full charge threshold and above a high charge threshold. In addition, two of the four light indicators may emit light when the internal battery has a charge level below the high charge threshold and above a half charge threshold. In addition, one of the four light indicators may emit light when the internal battery has a charge level below the half charge threshold and above a low charge threshold. In addition, one of the four light indicators may emit light when the internal battery has a charge level below the low charge threshold and above a null charge threshold. In addition, none of the four light indicators may emit light when the internal battery has a charge level at or below the null charge threshold.

In some example embodiments, to emit light differently based on a given status of an element of PCC 501 or the e-vaping device 520, a set of light indicators may cause one or more light indicators in the set to emit light at various color temperatures according to the status. For example, where set 512 includes one or more light indicators 511 and may emit light differently based on a charge level of an internal battery of the e-vaping device 520, one or more light indicators 511 in the set may emit light at a violet color temperature when the internal battery has a charge level at or above a full charge threshold value. In addition, one or more light indicators 511 in the set may emit light at a blue color temperature when the internal battery has a charge level below the full charge threshold and above a high charge threshold. In addition, one or more light indicators 511 in the set may emit light at a green color temperature when the internal battery has a charge level below the high charge threshold and above a half charge threshold. In addition, one or more light indicators 511 in the set may emit light at a yellow color temperature when the internal battery has a charge level below the half charge threshold and above a low charge threshold. In addition, one or more light indicators 511 in the set may emit light at an orange color temperature when the internal battery has a charge level below the low charge threshold and above a null charge threshold. In addition, one or more light indicators 511 in the set may emit light at a red color temperature when the internal battery has a charge level at or below the null charge threshold.

In some example embodiments, the emission of light by one or more light indicators 511 included in a given set of light indicators may be controlled by control circuitry included in the ECC 504. For example, the ECC 504 may selectively control the emission of light by one or more light indicators 511 included in set 510 based on a determination of a pre-vapor formulation reservoir level of a pre-vapor formulation reservoir of the e-vaping device 520 in contact with connection 508. In another example, the ECC 504 may selectively control the emission of light by one or more light indicators 511 included in set 512 based on a determination of a charge level of an internal battery of the e-vaping device 520 in contact with connection 508. In another example, the ECC 504 may selectively control the emission of light by one or more light indicators 511 included in set 514 based on a determination of a charge level of a battery of the ECC 504.

In some example embodiments, control circuitry included in the ECC 504 may determine one or more of a charge level of an internal battery of the e-vaping device 520 and a pre-vapor formulation reservoir level of a pre-vapor formulation reservoir of the e-vaping device 520 based on communication with one or more portions of the e-vaping device 520. The control circuitry may communicate with control circuitry included in the e-vaping device 520 where the control circuitry of the e-vaping device 520 generates data indicating one or more battery charge levels, reservoir levels, and so forth. The control circuitry in the ECC 504 may communicate with one or more portions of the e-vaping device 520 via an electrical connection to the e-vaping device 520 through connector 508, via a wireless communication link through a transceiver included in the PCC 500 (not shown) and a transceiver included in the e-vaping device 520, some combination thereof, and so forth. In some example embodiments, the ECC 504 control circuitry may communicate with one or more portions of the e-vaping device 520 in response to an electrical connection of the e-vaping device contacting the connection 508. In some example embodiments, the ECC 504 control circuitry may communicate with one or more portions of the e-vaping device 520 in response to a determination that the e-vaping device is within a range of wireless communication via a wireless communication link, including an ad hoc wireless communication network link.

The control circuitry may receive data from the e-vaping device 520. The control circuitry may determine one or more of battery charge level and reservoir level based on processing the data. The control circuitry may determine a charge level of a battery of the ECC 504 based on monitoring the ECC battery.

In some example embodiments, one or more light indicators may be selectively activated based on adult vaper interaction with an interface 506 included in the PCC 500. The interface 506 may include a button, tactile interface, and so forth. In some example embodiments, the interface 506 includes a wireless transceiver. In some example embodiments, control circuitry included in the ECC 504 may selectively communicate with one or more portions of the ECC 504, e-vaping device 520, and so forth based on adult vaper interaction with the interface 506. For example, the control circuitry may selectively activate one or more light indicators 511 in set 512 according to both the charge level of an internal battery of the e-vaping device and adult vaper interaction with interface 506.

In some example embodiments, one or more of the light indicators 511 included in the PCC 500 is a light emitting diode (LED).

In some example embodiments, the PCC may provide an adult vaper with improved awareness of the state of the e-vaping device, the PCC, some combination thereof, and so forth via the light indicator sets. For example, the light indicators may enable to the PCC to provide the adult vaper with a visually observable indication of one or more of the reservoir level or charge level of the e-vaping device, thereby enabling the adult vaper to know the capacity of the e-vaping device to provide a sensory experience through vaping. In addition, the adult the light indicators may enable to the PCC to provide the adult vaper with a visually observable cue that one or more of the electrical charge or pre-vapor formulation of the e-vaping device or PCC is approaching depletion, thereby providing the adult vaper with a prompt to replenish one or more of the electrical charge or pre-vapor formulation of the e-vaping device or PCC prior to complete depletion of same. As a result, an adult vaper may be provided with an improved vaping experience as the PCC may enable the adult vaper to avoid a loss of the vaping experience.

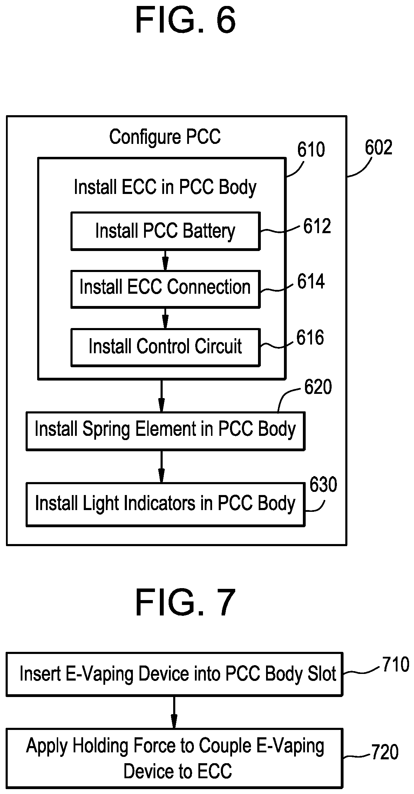

FIG. 6 is a flowchart illustrating a method for configuring a PCC to charge an e-vaping device according to some example embodiments. The configuring may be implemented with regard to any embodiments of the PCC included herein, including the PCC 100 shown in FIG. 1A and FIG. 1B. In some example embodiments, one or more portions of the configuring are implemented by a configuror. The configuror may be one or more of a human operator, a machine, some combination thereof, and so forth. The machine may be a fabrication machine. The machine may be a special purpose machine configured to implement the configuring based on executing program code stored in a memory device.

Referring to FIG. 6, at 602, the configuror configures a PCC to provide charging of an e-vaping device in the PCC body. At 610, the configuror installs an ECC in the PCC body. At 612, the configuror installs a battery in the PCC. At 614, the configuror installs an ECC connection in the PCC. The ECC connection may be installed so that the ECC connection is in a slot of the PCC body. Installing the ECC connection may include electrically coupling the ECC connection to the battery installed at 612. At 616, the configuror installs a control circuit in the PCC body. The control circuit may be electrically coupled to one or more of the ECC connection, the battery, and so forth. In some example embodiments, the installing at 616 may include installing a wireless communication interface, which may include a transceiver, in the PCC.

At 620, the configuror installs a spring element in a slot of the PCC body. The installing may include coupling the spring element to a portion of the slot so that the spring element is configured to exert a spring force to push a portion of one or more elements in contact with a distal end of the spring element away from contact with the ECC connection in the slot.

At 630, the configuror installs one or more sets of light indicators in the PCC. The installing at 630 may include electrically coupling the one or more sets of light indicators to one or more portions of the ECC, including one or more of control circuitry installed at 616, the battery installed at 612, the connection installed at 616, some combination thereof, and so forth.

FIG. 7 is a flowchart illustrating a method for inserting an e-vaping device into the PCC to charge the e-vaping device according to some example embodiments. The inserting may be implemented with regard to any embodiments of the PCC included herein, including the PCC 100 shown in FIG. 1A and FIG. 1B.

Referring to FIG. 7, at 710, an adult vaper inserts an e-vaping device into a slot of a body of a PCC, so that a tip end of the e-vaping device is in contact with a spring element in the slot. The spring element may exert a spring force on the tip end of the e-vaping device, such that an electrical connection of the e-vaping device is maintained at a separation distance from contact with an electrical connection in the body slot of the PCC. The electrical connection in the body slot may be electrically coupled to a battery of the PCC. The PCC body slot may establish a partial enclosure of the e-vaping device, such that a portion of the e-vaping device is exposed.

At 720, a holding force is applied, by one or more of the adult vapor or a portion of the PCC, to the e-vaping device to push the electrical connection of the e-vaping device into contact with the electrical connection in the PCC body slot. The holding force may be applied to an exposed portion of the e-vaping device. A portion of the PCC applying the holding force may be a cover of the PCC that completes an enclosure of the e-vaping device in the PCC.

While a number of example embodiments have been disclosed herein, it should be understood that other variations may be possible. Such variations are not to be regarded as a departure from the scope of the present disclosure, and all such modifications as would be obvious to one skilled in the art are intended to be included within the scope of the following claims.

## Claims

1. A personal charging case (100) for charging an e-vaping device, the e-vaping device including an internal battery and an electrical connection coupled to the internal battery, the personal charging case (100) comprising:
a body (101) configured to establish a partial enclosure of the e-vaping device within the personal charging case (100), the body (101) including,
a slot (104) configured to receive a portion of the e-vaping device, such that the e-vaping device is partially enclosed by the body (101);
an electrical charging circuit (130), the electrical charging circuit (130) including an electrical connection (122) within the slot (104), the electrical charging circuit (130) being configured to charge the e-vaping device internal battery in response to the electrical charging circuit electrical connection (122) contacting the e-vaping device electrical connection; and
a spring element (120) positioned within the slot (104), the spring element (120) being configured to exert a spring force on the e-vaping device to maintain a separation of the e-vaping device electrical connection from contact with the electrical charging circuit electrical connection (122) in the absence of a holding force.

2. The personal charging case (100) of claim 1, further comprising:
a cover (102) configured to exert the holding force on the e-vaping device, based on the cover (102) completing the enclosure of the e-vaping device within the personal charging case (100), the holding force being greater than the spring force such that the cover (102) pushes the e-vaping device electrical connection into contact with the electrical charging circuit electrical connection (122).

3. The personal charging case (100) of claim 1 or 2, further comprising:
an e-vaping device charge light indicator, the e-vaping device charge light indicator being configured to emit light at a selected one of a plurality of color temperatures based on a charge level of the e-vaping device internal battery.

4. The personal charging case (100) of claim 1, 2 or 3, wherein the electrical charging circuit (130) includes an internal battery (124), the electrical charging circuit internal battery (124) being configured to fully charge the e-vaping device internal battery.

5. The personal charging case (100) of claim 4, further comprising:
a personal charging case charge light indicator, the personal charging case charge light indicator being configured to emit light at a selected one of a plurality of color temperatures based on a charge level of the electrical charging circuit internal battery (124).

6. The personal charging case (100) of claim 4 or 5, wherein the electrical charging circuit internal battery (124) has a minimum discharge capacity of 150 mAh.

7. The personal charging case (100) of any preceding claim, further comprising:
an e-vaping device reservoir level light indicator, the e-vaping device reservoir level light indicator being configured to emit light at a selected one of a plurality of color temperatures based on an amount of pre-vapor formulation in a reservoir of the e-vaping device.

8. The personal charging case (100) of any preceding claim, further comprising:
control circuitry (126) electrically coupled to the electrical charging circuit (130), the control circuitry (126) being configured to communicate with at least one portion of the e-vaping device, the control circuitry (126) being further configured to determine at least one of an internal battery charge status of the e-vaping device and a reservoir status of the e-vaping device, based at least in part upon the communicating.

9. The personal charging case (100) of any preceding claim, wherein the electrical charging circuit electrical connection (122) extends along an internal sidewall of the slot (104).

10. The personal charging case (100) of any preceding claim, wherein the electrical charging circuit electrical connection (122) is located at an end of the slot (104), the end being distal from an opening in the slot (104), the opening being configured to receive the e-vaping device into the slot (104).

11. The personal charging case (100) of any preceding claim, further comprising:
a hinge mechanism (403), the hinge mechanism (403) coupling at least one end of the cover (102) to the body (101).

12. The personal charging case (100) of any preceding claim, wherein the body (101) is configured to receive the e-vaping device into the slot (104) along a longitudinal axis of the e-vaping device.

13. A method, comprising:
configuring (602) a personal charging case to charge an internal battery of an e-vaping device based on a holding force being exerted on the e-vaping device, the holding force holding an electrical connection of the e-vaping device in electrical contact with an electrical charging circuit of the personal charging case, the configuring including,
coupling (620) a spring element to a slot of the personal charging case, such that the personal charging case is configured to exert a spring force on an e-vaping device inserted into the personal charging case slot, the spring force separating the e-vaping device electrical connection from electrical contact with the electrical charging circuit in the absence of the holding force.

14. The method of claim 13, further comprising:
electrically coupling (630) an e-vaping device charge light indicator to the electrical charging circuit, the e-vaping device charge light indicator being configured to emit light at a selected one of a plurality of color temperatures based on a charge status of the e-vaping device internal battery.

15. The method of claim 13 or 14, further comprising:
electrically coupling (630) an e-vaping device reservoir level light indicator to the electrical charging circuit, the e-vaping device reservoir level light indicator being configured to emit light at a selected one of a plurality of color temperatures based on an amount of pre-vapor formulation included within at least one reservoir of the e-vaping device.

16. The method of claim 13, 14 or 15, further comprising:
electrically coupling (630) a personal charging case charge light indicator to an internal battery of the electrical charging circuit, the personal charging case charge light indicator being configured to emit light at a selected one of a plurality of color temperatures based on a charge status of the electrical charging circuit internal battery.

17. The method of any of claims 13 to 16, further comprising:
electrically coupling (616) control circuitry to the electrical charging circuit, the control circuitry being configured to communicate with one or more portions of the e-vaping device, the control circuitry being further configured to determine at least one of an internal battery charge status of the e-vaping device and a reservoir status of the e-vaping device, based on the communicating.

18. A method, comprising:
receiving (710) a portion of an e-vaping device into an interior slot of a personal charging case, such that the personal charging case partially encloses the e-vaping device, the personal charging case slot including a spring element and an electrical connection, the e-vaping device including an internal battery and an electrical connection coupled to the internal battery; and
exerting (720) a spring force, by the spring element, on the portion of the e-vaping device to maintain a separation distance between the e-vaping device electrical connection and the personal charging case electrical connection.

19. The method of claim 18, further comprising:
coupling the personal charging case electrical connection to the e-vaping device electrical connection, based on the spring element being compressed by a holding force, the holding force being greater than the spring force, the holding force being exerted on the spring element by the portion of the e-vaping device.

20. The method of claim 19, wherein
the personal charging case includes a battery, the personal charging case battery being coupled to the personal charging case electrical connection; and
the method further comprises:
supplying electrical power to the e-vaping device internal battery, based on the personal charging case electrical connection contacting the e-vaping device electrical connection.

21. The method of claim 20, further comprising:
driving at least one light indicator included in the personal charging case to emit light, based on at least one of,
an amount of electrical power stored in the personal charging case battery,
an amount of electrical power stored in the e-vaping device internal battery, and
an amount of pre-vapor formulation stored in a reservoir of the e-vaping device.

## Patentansprüche

1. Persönlicher Ladebehälter (100) zum Aufladen einer E-Dampfvorrichtung, wobei die E-Dampfvorrichtung eine interne Batterie und eine mit der internen Batterie gekoppelte elektrische Verbindung aufweist, wobei der persönliche Ladebehälter (100) aufweist:
einen Körper (101), der ausgelegt ist, eine teilweise Umhüllung der E-Dampfvorrichtung innerhalb des persönlichen Ladebehälters (100) herzustellen, wobei der Körper (101) einschließt,
einen Schlitz (104), der ausgelegt ist, einen Teil der E-Dampfvorrichtung aufzunehmen, sodass die E-Dampfvorrichtung teilweise von dem Körper (101) umschlossen ist;
eine elektrische Ladeschaltung (130), wobei die elektrische Ladeschaltung (130) eine elektrische Verbindung (122) innerhalb des Schlitzes (104) aufweist und die elektrische Ladeschaltung (130) ausgelegt ist, die interne Batterie der E-Dampfvorrichtung als Reaktion darauf, dass die elektrische Verbindung (122) der elektrischen Ladeschaltung die elektrische Verbindung der E-Dampfvorrichtung kontaktiert, aufzuladen; und
ein Federelement (120), das innerhalb des Schlitzes (104) positioniert ist, **dadurch gekennzeichnet, dass** das Federelement (120) ausgelegt ist, eine Federkraft auf die E-Dampfvorrichtung auszuüben, um eine Trennung der elektrischen Verbindung der E-Dampfvorrichtung von dem Kontakt mit der elektrischen Verbindung (122) der elektrischen Ladeschaltung in Abwesenheit einer Haltekraft aufrechtzuerhalten.

2. Persönlicher Ladebehälter (100) nach Anspruch 1, weiter aufweisend:
eine Abdeckung (102), die ausgelegt ist, die Haltekraft auf die E-Dampfvorrichtung basierend darauf, dass die Abdeckung (102) die Umhüllung der E-Dampfvorrichtung innerhalb des persönlichen Ladebehälters (100) vervollständigt, auszuüben, wobei die Haltekraft größer als die Federkraft ist, sodass die Abdeckung (102) die elektrische Verbindung der E-Dampfvorrichtung in Kontakt mit der elektrischen Verbindung (122) der elektrischen Ladeschaltung drückt.

3. Persönlicher Ladebehälter (100) nach Anspruch 1 oder 2, weiter aufweisend:
eine E-Dampfvorrichtungsladelichtanzeige, wobei die E-Dampfvorrichtungsladelichtanzeige ausgelegt ist, Licht bei einer ausgewählten von mehreren Farbtemperaturen basierend auf einem Ladestand der internen Batterie der E-Dampfvorrichtung zu emittieren.

4. Persönlicher Ladebehälter (100) nach Anspruch 1, 2 oder 3, wobei die elektrische Ladeschaltung (130) eine interne Batterie (124) aufweist und die interne Batterie (124) der elektrischen Ladeschaltung ausgelegt ist, die interne Batterie der E-Dampfvorrichtung vollständig aufzuladen.

5. Persönlicher Ladebehälter (100) nach Anspruch 4, weiter aufweisend:
eine persönliche Ladebehälterladelichtanzeige, wobei die persönliche Ladebehälterladelichtanzeige ausgelegt ist, Licht bei einer ausgewählten von mehreren Farbtemperaturen basierend auf einem Ladestand der internen Batterie (124) der elektrischen Ladeschaltung zu emittieren.

6. Persönlicher Ladebehälter (100) nach Anspruch 4 oder 5, wobei die interne Batterie (124) der elektrischen Ladeschaltung eine Mindestentladekapazität von 150 mAh aufweist.

7. Persönlicher Ladebehälter (100) nach einem der vorstehenden Ansprüche, weiter aufweisend:
eine E-Dampfvorrichtungsvorratsbehälterniveaulichtanzeige, wobei die E-Dampfvorrichtungsvorratsbehälterniveaulichtanzeige ausgelegt ist, Licht bei einer ausgewählten von mehreren Farbtemperaturen basierend auf einer Menge an Vordampfformulierung in einem Vorratsbehälter der E-Dampfvorrichtung zu emittieren.

8. Persönlicher Ladebehälter (100) nach einem der vorstehenden Ansprüche, weiter aufweisend:
Steuerschaltungen (126), die mit der elektrischen Ladeschaltung (130) elektrisch gekoppelt sind, wobei die Steuerschaltungen (126) ausgelegt sind, mit mindestens einem Teil der E-Dampfvorrichtung zu kommunizieren, und die Steuerschaltungen (126) weiter ausgelegt sind, mindestens einen von einem internen Batterieladestatus der E-Dampfvorrichtung und einem Vorratsbehälterstatus der E-Dampfvorrichtung mindestens teilweise basierend auf dem Kommunizieren zu bestimmen.

9. Persönlicher Ladebehälter (100) nach einem der vorstehenden Ansprüche, wobei sich die elektrische Verbindung (122) der elektrischen Ladeschaltung entlang einer inneren Seitenwand des Schlitzes (104) erstreckt.

10. Persönlicher Ladebehälter (100) nach einem der vorstehenden Ansprüche, wobei sich die elektrische Verbindung (122) der elektrischen Ladeschaltung an einem Ende des Schlitzes (104) befindet und sich das Ende distal von einer Öffnung in dem Schlitz (104) befindet und die Öffnung ausgelegt ist, die E-Dampfvorrichtung in dem Schlitz (104) aufzunehmen.

11. Persönlicher Ladebehälter (100) nach einem der vorstehenden Ansprüche, weiter aufweisend:
einen Scharniermechanismus (403), wobei der Scharniermechanismus (403) mindestens ein Ende der Abdeckung (102) mit dem Körper (101) koppelt.

12. Persönlicher Ladebehälter (100) nach einem der vorstehenden Ansprüche, wobei der Körper (101) ausgelegt ist, die E-Dampfvorrichtung entlang einer Längsachse der E-Dampfvorrichtung in den Schlitz (104) aufzunehmen.

13. Verfahren, aufweisend:
Auslegen (602) eines persönlichen Ladebehälters zum Aufladen einer internen Batterie einer E-Dampfvorrichtung basierend auf einer Haltekraft, die auf die E-Dampfvorrichtung ausgeübt wird, wobei die Haltekraft eine elektrische Verbindung der E-Dampfvorrichtung in elektrischem Kontakt mit einer elektrischen Ladeschaltung des persönlichen Ladebehälters hält und das Auslegen einschließt,
Koppeln (620) eines Federelements mit einem Schlitz des persönlichen Ladebehälters, sodass der persönliche Ladebehälter ausgelegt ist, eine Federkraft auf eine in den Schlitz des persönlichen Ladebehälters eingeführte E-Dampfvorrichtung auszuüben, wobei die Federkraft die elektrische Verbindung der E-Dampfvorrichtung in Abwesenheit der Haltekraft von einem elektrischen Kontakt mit der elektrischen Ladeschaltung trennt.

14. Verfahren nach Anspruch 13, weiter aufweisend:
elektrisches Koppeln (630) einer E-Dampfvorrichtungsladelichtanzeige mit der elektrischen Ladeschaltung, wobei die E-Dampfvorrichtungsladelichtanzeige ausgelegt ist, Licht bei einer ausgewählten von mehreren Farbtemperaturen basierend auf einem Ladestatus der internen Batterie der E-Dampfvorrichtung zu emittieren.

15. Verfahren nach Anspruch 13 oder 14, weiter aufweisend:
elektrisches Koppeln (630) einer E-Dampfvorrichtungsvorratsbehälterniveaulichtanzeige mit der elektrischen Ladeschaltung, wobei die E-Dampfvorrichtungsvorratsbehälterniveaulichtanzeige ausgelegt ist, Licht bei einer ausgewählten von mehreren Farbtemperaturen basierend auf einer Menge an Vordampfformulierung, die in mindestens einem Vorratsbehälter der E-Dampfvorrichtung beinhaltet ist, zu emittieren.

16. Verfahren nach Anspruch 13, 14 oder 15, weiter aufweisend:
elektrisches Koppeln (630) einer persönlichen Ladebehälterladelichtanzeige mit einer internen Batterie der elektrischen Ladeschaltung, wobei die persönliche Ladebehälterladelichtanzeige ausgelegt ist, Licht bei einer ausgewählten von mehreren Farbtemperaturen basierend auf einem Ladezustand der internen Batterie der elektrischen Ladeschaltung zu emittieren.

17. Verfahren nach einem der Ansprüche 13 bis 16, weiter aufweisend:
elektrisches Koppeln (616) von Steuerschaltungen mit der elektrischen Ladeschaltung, wobei die Steuerschaltungen ausgelegt sind, mit einem oder mehreren Abschnitten der E-Dampfvorrichtung zu kommunizieren, und die Steuerschaltungen weiter ausgelegt sind, einen internen Batterieladestatus der E-Dampfvorrichtung und/oder einen Vorratsbehälterstatus der E-Dampfvorrichtung basierend auf dem Kommunizieren zu bestimmen.

18. Verfahren, aufweisend:
Aufnehmen (710) eines Teils einer E-Dampfvorrichtung in einen inneren Schlitz eines persönlichen Ladebehälters, sodass der persönliche Ladebehälter die E-Dampfvorrichtung teilweise umschließt, wobei der Schlitz des persönlichen Ladebehälters ein Federelement und eine elektrische Verbindung einschließt und die E-Dampfvorrichtung eine interne Batterie und eine mit der internen Batterie gekoppelte elektrische Verbindung einschließt; und
Ausüben (720) einer Federkraft durch das Federelement auf den Teil der E-Dampfvorrichtung, um einen Trennungsabstand zwischen dem elektrischen Anschluss der E-Dampfvorrichtung und dem elektrischen Anschluss des persönlichen Ladebehälters aufrechtzuerhalten.

19. Verfahren nach Anspruch 18, weiter aufweisend:
Koppeln der elektrischen Verbindung des persönlichen Ladebehälters mit der elektrischen Verbindung der E-Dampfvorrichtung basierend darauf, dass das Federelement durch eine Haltekraft zusammengedrückt wird, wobei die Haltekraft größer ist als die Federkraft und die Haltekraft durch den Teil der E-Dampfvorrichtung auf das Federelement ausgeübt wird.

20. Verfahren nach Anspruch 19, wobei
der persönliche Ladebehälter eine Batterie einschließt und die Batterie des persönlichen Ladebehälters mit der elektrischen Verbindung des persönlichen Ladebehälters gekoppelt ist; und
das Verfahren weiter aufweist:
Versorgen der internen Batterie der E-Dampfvorrichtung mit elektrischer Energie basierend darauf, dass die elektrische Verbindung des persönlichen Ladebehälters die elektrische Verbindung der E-Dampfvorrichtung kontaktiert.

21. Verfahren nach Anspruch 20, weiter aufweisend:
Ansteuern von mindestens einer in dem persönlichen Ladebehälter enthaltenen Lichtanzeige basierend auf mindestens einem von
einer Menge an elektrischer Energie, die in der Batterie des persönlichen Ladebehälters gespeichert ist,
einer Menge an elektrischer Energie, die in der internen Batterie der E-Dampfvorrichtung gespeichert ist, und
einer Menge an Vordampfformulierung, die in einem Behälter der E-Dampfvorrichtung gespeichert ist.

## Revendications

1. Boîtier de chargement personnel (100) pour charger un dispositif de vapotage électronique, le dispositif de vapotage électronique incluant une batterie interne et une connexion électrique couplée à la batterie interne, le boîtier de chargement personnel (100) comprenant :
un corps (101) configuré pour établir une enceinte partielle du dispositif de vapotage électronique dans le boîtier de chargement personnel (100), le corps (101) incluant,
une fente (104) configurée pour recevoir une partie du dispositif de vapotage électronique, de sorte que le dispositif de vapotage électronique est partiellement enfermé par le corps (101) ;
un circuit de chargement électrique (130), le circuit de chargement électrique (130) incluant une connexion électrique (122) dans la fente (104), le circuit de chargement électrique (130) étant configuré pour charger la batterie interne du dispositif de vapotage électronique en réponse à la connexion électrique du circuit de chargement électrique (122) en contact avec la connexion électrique du dispositif de vapotage électronique ; et
un élément à ressort (120) positionné à l'intérieur de la fente (104), **caractérisé par** l'élément à ressort (120) étant configuré pour exercer une force de ressort sur le dispositif de vapotage électronique pour maintenir une séparation de la connexion électrique du dispositif de vapotage électronique du contact avec la connexion électrique du circuit de chargement électrique (122) en l'absence d'une force de maintien.

2. Boîtier de chargement personnel (100) selon la revendication 1, comprenant en outre :
un couvercle (102) configuré pour exercer la force de maintien sur le dispositif de vapotage électronique, sur la base du couvercle (102) complétant l'enceinte du dispositif de vapotage électronique à l'intérieur du boîtier de chargement personnel (100), la force de maintien étant supérieure à la force de ressort telle que le couvercle (102) pousse la connexion électrique du dispositif de vapotage électronique en contact avec la connexion électrique du circuit de chargement électrique (122).

3. Boîtier de chargement personnel (100) selon la revendication 1 ou 2, comprenant en outre :
un indicateur lumineux de charge du dispositif de vapotage électronique, l'indicateur lumineux de charge du dispositif de vapotage électronique étant configuré pour émettre de la lumière à une température sélectionnée parmi une pluralité de températures de couleur sur la base d'un niveau de charge de la batterie interne du dispositif de vapotage électronique.

4. Boîtier de chargement personnel (100) selon la revendication 1, 2 ou 3, dans lequel le circuit de chargement électrique (130) inclut une batterie interne (124), la batterie interne du circuit de chargement électrique (124) étant configurée pour charger complètement la batterie interne du dispositif de vapotage électronique.

5. Boîtier de chargement personnel (100) selon la revendication 4, comprenant en outre :
un indicateur lumineux de charge du boîtier de chargement personnel, l'indicateur lumineux de charge du boîtier de chargement personnel étant configuré pour émettre de la lumière à une pluralité de températures de couleur en fonction du niveau de charge de la batterie interne du circuit de chargement électrique (124) .

6. Boîtier de chargement personnel (100) selon la revendication 4 ou 5, dans lequel la batterie interne du circuit de chargement électrique (124) a une capacité de décharge minimale de 150 mAh.

7. Boîtier de chargement personnel (100) selon une quelconque des revendications précédentes, comprenant en outre :
un indicateur lumineux de niveau du réservoir du dispositif de vapotage électronique, l'indicateur lumineux de niveau du réservoir du dispositif de vapotage électronique étant configuré pour émettre de la lumière à une valeur de température sélectionnée parmi une pluralité de températures de couleur basée sur une quantité de formulation pré-vapeur dans un réservoir du dispositif de vapotage électronique.

8. Boîtier de chargement personnel (100) selon une quelconque des revendications précédentes, comprenant en outre :
un circuit de commande (126) couplé électriquement au circuit de chargement électrique (130), le circuit de commande (126) étant configuré pour communiquer avec au moins une partie du dispositif de vapotage électronique, le circuit de commande (126) étant en outre configuré pour déterminer au moins l'un d'un état de charge de la batterie interne du dispositif de vapotage électronique et un état de réservoir du dispositif de vapotage électronique, basé au moins en partie sur la communication.

9. Boîtier de chargement personnel (100) selon l'une quelconque des revendications précédentes, dans lequel la connexion électrique du circuit de chargement électrique (122) s'étend le long d'une paroi latérale interne de la fente (104).

10. Boîtier de chargement personnel (100) selon l'une quelconque des revendications précédentes, dans lequel la connexion électrique du circuit de chargement électrique (122) est située à une extrémité de la fente (104), l'extrémité étant distale à partir d'une ouverture dans la fente (104), l'ouverture étant configurée pour recevoir le dispositif de vapotage électronique dans la fente (104) .

11. Boîtier de chargement personnel (100) selon une quelconque des revendications précédentes, comprenant en outre :
un mécanisme de charnière (403), le mécanisme de charnière (403) reliant au moins une extrémité du couvercle (102) au corps (101) .

12. Boîtier de chargement personnel (100) selon l'une quelconque des revendications précédentes, dans lequel le corps (101) est configuré pour recevoir le dispositif de vapotage électronique dans la fente (104) le long d'un axe longitudinal du dispositif de vapotage électronique.

13. Procédé comprenant :
la configuration (602) d'un boîtier de chargement personnel pour charger une batterie interne d'un dispositif de vapotage électronique en fonction d'une force de maintien exercée sur le dispositif de vapotage électronique, la force de maintien maintenant une connexion électrique du dispositif de vapotage électronique en contact électrique avec un circuit de chargement électrique du boîtier de chargement personnel, la configuration incluant,
l'accouplement (620) d'un élément ressort à une fente du boîtier de chargement personnel, de sorte que le boîtier de chargement personnel est configuré pour exercer une force de ressort sur un dispositif de vapotage électronique inséré dans la fente du boîtier de chargement personnel, la force du ressort séparant la connexion électrique du dispositif de vapotage électronique par contact électrique avec le circuit de chargement électrique en l'absence de la force de maintien.

14. Procédé selon la revendication 13, comprenant en outre :
l'accouplement électrique (630), d'un indicateur lumineux de charge du dispositif de vapotage électronique au circuit de chargement électrique, l'indicateur lumineux de charge du dispositif de vapotage électronique étant configuré pour émettre de la lumière à une température sélectionnée parmi une pluralité de températures de couleur en fonction d'un état de charge de la batterie interne du dispositif de vapotage électronique.

15. Procédé selon la revendication 13 ou 14, comprenant en outre :
l'accouplement électrique (630), d'un indicateur lumineux de niveau du réservoir du dispositif de vapotage électronique au circuit de chargement électrique, l'indicateur lumineux de niveau du réservoir du dispositif de vapotage électronique étant configuré pour émettre de la lumière à une température sélectionnée parmi une pluralité de températures de couleur sur la base d'une quantité de formulation pré-vapeur incluse dans au moins un réservoir du dispositif de vapotage électronique.

16. Procédé selon la revendication 13, 14 ou 15, comprenant en outre :
l'accouplement électrique (630), d'un indicateur lumineux de charge du boîtier de chargement personnel à une batterie interne du circuit de chargement électrique, l'indicateur lumineux de charge du boîtier de chargement personnel étant configuré pour émettre de la lumière à une température sélectionnée parmi une pluralité de températures de couleur en fonction d'un état de charge de la batterie interne du circuit de chargement électrique.

17. Procédé selon l'une quelconque des revendications 13 à 16, comprenant en outre :
l'accouplement électrique (616) des circuits de commande au circuit de chargement électrique, le circuit de commande étant configuré pour communiquer avec une ou plusieurs parties du dispositif de vapotage électronique, le circuit de commande étant en outre configuré pour déterminer au moins l'un d'un état de charge de la batterie interne du dispositif de vapotage électronique et un état du réservoir du dispositif de vapotage électronique, basé sur la communication.

18. Procédé comprenant :
la réception (710) d'une partie d'un dispositif de vapotage électronique dans une fente intérieure d'un boîtier de chargement personnel, de sorte que le boîtier de chargement personnel entoure partiellement le dispositif de vapotage électronique, la fente du boîtier de chargement personnelle incluant un élément de ressort et une connexion électrique, le dispositif de vapotage électronique incluant une batterie interne et une connexion électrique couplée à la batterie interne ; et
l'exercice (720) d'une force de ressort, par l'élément de ressort, sur la partie du dispositif de vapotage électronique pour maintenir une distance de séparation entre la connexion électrique du dispositif de vapotage électronique et la connexion électrique du boîtier de chargement personnel.

19. Procédé selon la revendication 18, comprenant en outre :
l'accouplement de la connexion électrique du boîtier de chargement personnel à la connexion électrique du dispositif de vapotage électronique, en fonction de l'élément de ressort compressé par une force de maintien, la force de maintien étant supérieure à la force du ressort, la force de maintien exercée sur l'élément de ressort par la partie du dispositif de vapotage électronique.

20. Procédé selon la revendication 19, dans lequel
le boîtier de chargement personnel inclut une batterie, la batterie du boîtier de chargement personnel étant couplée à la connexion électrique du boîtier de chargement personnel ; et
le procédé comprend en outre :
fournir de l'énergie électrique à la batterie interne du dispositif de vapotage électronique, sur la base de la connexion électrique du boîtier de chargement personnel en contact avec la connexion électrique du dispositif de vapotage électronique.

21. Procédé selon la revendication 20, comprenant en outre :
l'actionnement d'au moins un indicateur lumineux inclus dans le boîtier de chargement personnel pour émettre de la lumière, sur la base d'au moins l'un des éléments suivants :
une quantité d'énergie électrique stockée dans la batterie du boîtier de chargement personnel,
une quantité d'énergie électrique stockée dans la batterie interne du dispositif de vapotage électronique, et
une quantité de formulation pré-vapeur stockée dans un réservoir du dispositif de vapotage électronique.
